# EUROPÄISCHE PATENTSCHRIFT

(11) **EP 0 736 645 B1**
(45) Veröffentlichungstag und Bekanntmachung des Hinweises auf die Patenterteilung: **04.06.2003**
(21) Anmeldenummer: 96105029.1
(22) Anmeldetag: 29.03.1996
(51) Int. Cl.: E04F 13/18, C08K 3/22, C08L 33/10

(54) **Fassadenverkleidungselemente**
Wall elements
Eléments de façade

(30) Priorität: 07.04.1995 DE 19513173
(43) Veröffentlichungstag der Anmeldung: 09.10.1996
(73) Patentinhaber: Röhm GmbH & Co. KG, 64293 Darmstadt (DE)
(72) Erfinder: Benz, Volker, Dr., 64739 Höchst (DE); Müller, Michael, Dr., 64625 Bensheim (DE); Krieg, Manfred, Dr., 64289 Darmstadt (DE); Ittmann, Günther, 64823 Gross-Umstadt (DE)

(56) Entgegenhaltungen:
- DE-A- 2 718 024
- FR-A- 2 389 645
- US-A- 4 786 660
- US-A- 5 444 115

## Beschreibung

### Gebiet der Erfindung

Die Erfindung betrifft Fassadenverkleidungselemente in Plattenform auf Basis von hochgefülltem Polyalkylmethacrylat.

### Stand der Technik

Schon seit längerer Zeit beschäftigt sich die Technik mit Fassadenverkleidungen auf Kunststoff-Basis. So werden aus Polyvinylchlorid und mineralischen Füllstoffen, z.B. im Verhältnis 30 : 70 mit feinkörnigem Quarz kunststeinartige Platten hergestellt (vgl. H.J. Saechtling, Hrsg. Bauen mit Kunststoffen, S. 102 - 103, C. Hanser Verlag 1973).
Im selben Werk finden sich auch Kriterien für "Halbzeug und Fassadenelemente": "Die räumliche Gestaltung dünnwandiger Kunststoffelemente und in Verbindung damit auch deren Montage müssen zwei von den Werkstoffeigenschaften her gegebenen Forderungen Rechnung tragen. Die Elemente müssen durch Formgebung hinreichend versteift werden und Formänderungen infolge der relativ großen Wärmeausdehnung vor allem der thermoplastischen Kunststoffe sollen optisch und spannungsmäßig möglichst weitgehend innerhalb der Elemente abgefangen werden. Große, ebene, nicht durch Hilfsversteifungen abgestützte Flächen sind für Kunststoffelemente unter beiden Gesichtspunkten nicht zweckmäßig. Die einfachste Form werkstoffgerechter Formgebung ist die auch für dünnwandige Elemente aus anderen Baustoffen angewandte Wellung". (Vgl. H. J. Saechtling loc.cit., S. 293) Erfahrungen mit dunkelfarbigpigmentierten PVC-Bauelementen haben ergeben, daß die Oberflächentemperatur bei Sonneneinstrahlung zeitweilig so hoch werden kann, daß es zur Verformung des weicher werdenden Materials unter der Wärmeausdehnungsspannung kommt (vgl. H.J. Saechtling lo.cit. S. 289/290). DE-OS 27 18 024 beschreibt Gegenstände aus einem vernetzten (Meth)acrylatpolymer (und mit weiteren Comonomeren), einem inerten Füllstoff und gefärbten Kunstfasern. Der Gegenstand ist buntscheckig. Aus der deutschen Offenlegungsschrift DE-A 28 18 954 ist eine polymerisierbare Harzmasse, gekennzeichnet durch einen Gehalt an einem Praepolymerisat, enthaltend ein Polymer, aufgebaut aus mindestens 50 Gew.-% C₁-C₈-Alkylmethacrylat und 0,01 bis 8 Gew.-% ungesättigter Carbonsäuremonomereinheit und ein Monomer, das zu mindestens 50 Gew.-% aus C₁-C₈-Alkylmethacrylat besteht, einem eingemischten Polymerisationspromotorsystem und mit dem Gemisch vermengt, 40 - 80 Gew.-% bezogen auf das Gesamtgewicht eines inerten teilchenförmigen Füllstoffs bekannt. Als Füllmaterialien werden hydratisierte Silikate, Metalloxide und Magnesiumoxichlorid genannt. Beansprucht werden ferner aus dem genannten Polymermaterial hergestellte Formkörper wie Platten oder Bahnen einer Dicke von etwa 0,25 bis 10 cm. Derartige Bahnen und Platten seien vielseitig verwendbar, wie z.B. als Oberflächenbelag und Überzugsmaterial in Bädern, Küchen und verschiedenen Bauwerkinnen- und Außeneinsätzen.

### Aufgabe und Lösung

Verständlicherweise liegt bei Fassadenbekleidungen die Einhaltung bestimmter sicherheitsrelevanter Kriterien, die z.B. Stabilität, Festigkeit und Brandverhalten betreffen, im öffentlichen Interesse und es bestehen vielfach dahingehende behördliche Vorschriften. Die Fassadenbekleidungen müssen selbstverständlich den aesthetischen Ansprüchen genügen. Zu den zu lösenden Problemen gehört u.a. die Befestigung der Fassadenbekleidungselemente an den Wänden und die Gestaltung der Fugen, beides unter dem Gesichtspunkt der relativ hohen thermischen Ausdehnungskoeffizienten der in Frage kommenden Kunststoffe. Andererseits ergeben sich bei der Verwendung von Kunstharz-Verkleidungselementen die Chance der Gewichtsverringerung verglichen mit Natursteinfassaden sowie relative Freiheit im Hinblick auf die Farbgebung und die Oberflächengestaltung. Nicht zu vernachlässigen ist freilich dabei die mit der Stabilität von Kunststoffen unter Bewitterungsbedingungen und im weiteren die Farbechtheit bei Einfärbung verbundene Problematik. Generell war es wünschenswert, von den im Baugewerbe üblichen Fassaden- und Unterkonstruktionen Gebrauch zu machen.
Der Stand der Technik bietet keine konkreten Hinweise, wie die vielfachen Anforderungen in sicherheitstechnisch und aesthetisch befriedigender Weise zu lösen waren. Es bestand daher die Aufgabe, Fassadenbekleidungselemente zur Verfügung zu stellen, die den Anforderungen an das Material und an die Befestigung genügen.

Die Erfindung betrifft daher Fassadenbekleidungselemente FBE in Plattenform, hergestellt aus hochgefülltem Polyalkylmethacrylat, nach dem Gießverfahren in einer entsprechenden, formgebenden Polymerisationskammer oder mittels einer Doppelbandanlage, wobei die radikalisch initiierte Polymerisation zu dem Polyalkylmethacrylat PM durchgeführt wird, ausgehend von einer Gießharzsuspension enthaltend
A) 40 - 80 Gew.-Teile eines teilchenförmigen anorganischen Füllstoffs, ausgewählt aus der Gruppe bestehend aus Aluminiumhydroxid, Aluminiumoxidhydrat, Magnesiumhydroxid,
B) 60 - 20 Gew.-Teile einer flüssigen polymerisierbaren Polyalkylmethacrylat-Vorstufe PM, deren Monomeranteil zu mindestens 50 Gew.-% aus Methylmethacrylat besteht, und
C) 0 - 5 Gew.-Teile, vorzugsweise 0,1 bis 5 Gew.-Teile pyrogenes oder thermisch erzeugtes, hochdisperses Siliciumdioxid, mit der Maßgabe, daß das Polyalkylmethacrylat keine Carbonsäuremonomereinheiten enthält.

Gemäss der Erfindung ist der teilchenförmige anorganische Füllstoff gemäß A) ein Gemisch aus mindestens zwei Füllstoffteilchen-Fraktionen unterschiedlicher mittlerer Teilchengröße, wobei das Größenverhältnis der durchschnittlichen Teilchengrößen der großen und der kleinen Füllstoffteilchen zwischen 10 : 1 und 2 : 1, vorzugsweise zwischen 6 : 1 und 4 : 1 liegt und das Gewichtsverhältnis der Anteile der großen und der kleinen Füllstoffteilchen zwischen 4 : 1 und 1 : 4, vorzugsweise zwischen 2 : 1 und 1 : 2, besonders bevorzugt bei ca. 1 : 1 liegt, üblicherweise ergänzen sich A) und B) jeweils zu 100 Gew.-Teilen. Insbesondere betrifft die Erfindung flache ebene Platten, die gegebenenfalls eine strukturierte Oberfläche besitzen können. Zweckmäßig wird bei den anorganischen Füllstoffen gemäß A) eine mittlere Korngröße der Füllstoffteilchen von 200 µm (Durchmesser), vorzugsweise von 100 µm, speziell von 75 µm nicht überschritten. Füllstoffteilchen mit einer Korngröße < 0,1 **µm** sollen im allgemeinen nicht mehr als 10 % des Volumens aller Füllstoffteilchen ausmachen. Die Teilchengröße wird nach den üblichen Verfahren bestimmt, wobei zur Teilchengrößenbestimmung die jeweils größten Abmessungen der Partikel herangezogen werden (vgl. z.B. Scarlett, Filtration & Separation, S. 215 , 1965). Bevorzugt ist der anorganische Füllstoff so beschaffen, daß das ausgehärtete Gießharz einen elastischen Schermodul von 5 GNm⁻², vorzugsweise von wenigstens 10 GNm⁻² aufweist, wobei bei der Einstellung der mechanischen Eigenschaften die vorgesehene Anwendung als Plattenmaterial ausschlaggebend ist.
Der Füllstoffanteil an den Gießharzen beträgt erfindungsgemäß mindestens 40 Gew.-%. Im allgemeinen werden 80 Gew.-% nicht überschritten, wobei als Richtwert ein verhältnismäßig hoher Gehalt, z.B. von 50 bis 80 Gew.-% anzusehen ist. Die Herstellung der Füllstoffe gemäß A) in den zweckmäßigen Korngrößen kann in bekannter Weise, beispielsweise durch Brechen und Mahlen erfolgen. Bevorzugt sind als Füllstoffe A) Aluminiumhydroxid bzw. Aluminiumoxidhydrat. Sofern Gemische aus zwei verschiedenen Korngrößenbereichen zur Anwendung kommen, seien beispielsweise Füllstoffkombinationen aus Aluminiumhydroxid mit einer mittleren Teilchengröße von 45 µm (Produkt ALCOA ® C33, Produkt der Fa. Alcoa, USA) und Aluminiumhydroxid mit einer mittleren Teilchengröße von 8 µm (Produkt ALCOA® C333).
Unter dem erfindungsgemäß gemäß C) anzuwendenden, pyrogenen oder thermisch erzeugten hochdispersen Siliciumdioxid versteht die Technik solche Kieselsäureprodukte, die durch Flammenhydrolyse bzw. nach dem Lichtbogenverfahren hergestellt worden sind (vgl. Ullmanns Encyclopädie der Technischen Chemie, 4. Auflage, Bd. 18, S. 652 - 653, Verlag Chemie; Kirk-Othmer, Encyclopedia of Chemical Technology, 3rd. Ed. Vol. 20, 768 - 773, J. Wiley 1982). Im allgemeinen hat das hochdisperse, pyrogene Siliciumdioxid einen SiO₂-Gehalt von 99,7 %. Es ist aus amorphen, kugelförmigen Teilchen mit in der Regel einem Durchmesser von 5 - 50 nm, speziell bis 20 nm aufgebaut. Die Primärteilchen von nach dem Lichtbogenverfahren hergestellten Siliciumdioxid liegt bei 5 - 500 nm. Die Dichte beträgt bei beiden Produkttypen ca. 2,2 g/cm². Bevorzugt wird die Anwendung der durch Flammenhydrolyse erzeugten pyrogenen Kieselsäure. Besonders bevorzugt sind die Produkte, die als AEROSIL® oder CABO-SIL® im Handel erhältlich sind. Speziell genannt seien die oberflächenbehandelten, hydrophoben AEROSIL-Typen. Zweckmäßig liegt der Anteil des pyrogenen oder thermisch erzeugten, hochdispersen Siliciumdioxids an der Suspension im Bereich 0,1 bis 5,0 Gew.-%; als Anhalt seien 0,5 Gew.-% genannt.

Die flüssige Polyalkylmethacrylat-Vorstufe PM' entspricht an sich dem Stand der Technik. So kann vorteilhafterweise von der Lehre der EP-B 218 866 bzw. der US-A 4,786,660 Gebrauch gemacht werden. Zu achten ist auf die Abwesenheit von Carbonsäuremonomereinheiten - auch in Form von Salzen derselben - im gesamten Polymerisat. Das Monomer Methylmethacrylat, das zu mindestens 50 Gew.-% in der Vorstufe PM' vorliegt, enthält zweckmäßig ein oder mehrere Praepolymerisate, speziell PMMA.
Zusätzlich zu MMA kann die Polyalkylmethacrylat-Vorstufe PM' noch weitere, an sich bekannte freiradikalisch copolymerisierbare Monomere M, wie (Meth)acrylsäureester, die gegebenenfalls noch am Alkyl substituiert sein können, Styrol und seine C₁-C₄-Alkyl-Derivate, Vinylester von Carbonsäuren, heterocyclische Vinylverbindungen, (Meth)acrylnitril, Vinylether enthalten. (Vgl. Ullmanns Enzyklopädie der Techn. Chemie, 3. Aufl. Bd. 14, s. 108 - 110, Urban & Schwarzenberg 1963).

Insbesondere seien genannt Comonomere der Formel I: 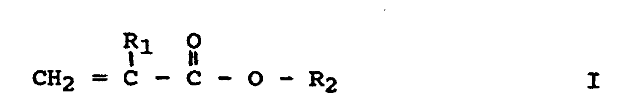 worin R₁ für Wasserstoff oder Methyl, R₂ für einen gegebenenfalls verzweigten und gegebenenfalls substituierten Alkylrest mit 1 bis 18 Kohlenstoffatomen, für einen gegebenenfalls substituierten Cycloalkylrest mit 5 bis 12 Kohlenstoffatomen oder für einen gegebenenfalls substituierten Arylrest mit 6 bis 10 Kohlenstoffatomen steht, mit der Maßgabe, daß R₁ und R₂ nicht gleichzeitig für Methyl stehen sollen. Die an sich bekannten Substituenten sind beispielsweise Halogen, Hydroxy, Alkoxy, Dialkylaminosubstituenten mit C₁-C₁₂-Alkylresten, vorzugsweise mit C₁-C₆-Alkylresten.

Insbesondere seien als Comonomere Verbindungen der Formel I genannt, worin R₂ für Alkylreste mit 1 bis 8 Kohlenstoffatomen steht, wie beispielsweise Ethyl(meth)-acrylat, Propyl(meth)acrylat, Butyl(meth)acrylat bzw. Isomere, 2-Ethylhexyl(meth)acrylat, Cyclohexyl(meth)-acrylat, Phenyl(meth)acrylat, Benzyl(meth)acrylat. Ferner können die Polymervorstufen PM' noch an sich bekannte vernetzende Monomere enthalten, beispielsweise solche mit mindestens zwei polymerisationsfähigen Vinylgruppen im Molekül (vgl. H. Rauch-Puntigam, Th. Völker, "Acryl- und Methacrylverbindungen", Seite 184, Springer-Verlag, 1967), wobei exemplarisch Ethylenglykoldimethacrylat, 1,4-Butandioldimethacrylat, Triglykoldimethacrylat, Trimethylolpropantrimethacrylat, Allylverbindungen wie Allylmethacrylat oder Triallylcyanurat genannt seien. Der Gehalt an vernetzenden Monomeren liegt im allgemeinen bei 0,01 bis 10 Gew.-%, vorzugsweise bei 0,1 bis 5 Gew.-% bezogen auf die flüssigen Polymervorstufen PM'. Definitionsgemäß haben die Polymervorstufen PM' einen Gehalt von über 50 Gew.-%, speziell von 80 bis 100 Gew.-% an Methylmethacrylat. Als Comonomere können, wie bereits ausgeführt, weitere mit den Methacrylestern der Formel I copolymerisierbare Monomere verwendet werden, beispielsweise die schon genannten Vinylaromaten und heterocyclischen Vinylverbindungen, so z.B. Styrol, ringsubstitierte Styrole, α-Methylstyrol, Divinylbenzol, Vinylpyrrolidon, Vinylpyridin, Vinylimidazol, Acrylnitril und Methacrylnitril, Vinylester wie Vinylacetat oder Vinylpropionat. Im allgemeinen überwiegt neben MMA der Anteil der (Meth)acrylsäureester der Formel I und der vernetzenden Monomeren, die zusammen mit MMA vorteilhaft bis 100 Gew.-% der Polymervorstufe ausmachen können. Besonders günstig ist ein Gemisch aus dem Monomeren Methylmethacrylat und einem vernetzenden Monomeren, wie beispielsweise Glykoldi-methacrylat, wobei das Gewichtsverhältnis vorteilhaft zwischen 95 : 5 und 99,9 : 0,1 liegt. Vorzugsweise enthält die flüssige, polymerisierbare Vorstufe Praepolymerisate PM', die im allgemeinen aus denselben Monomeren M wie die polymerisierbare Vorstufe aufgebaut sind, wobei die Praepolymerisate PM' jedoch in der Regel keine funktionalisierten Monomere enthalten. Im allgemeinen gelten die selben Proportionen, wie für die Monomeren M angegeben. Die monomeren Bestandteile der Praepolymerisate PM' können identisch sein mit den Monomeren M oder auch von diesen verschieden. Vorzugsweise sind die Praepolymerisate PM' in den Monomeren M gelöst, sie können aber auch darin dispergiert sein. In der Regel haben die Praepolymerisate PM' mittlere Molekulargewichte M_{w} im Bereich zwischen 2 x 10⁴ und 8 x 10⁵ Dalton (Bestimmung durch Gelpermeationschromatographie, vgl. hierzu: H.F. Mark et.al., Encyclopedia of Polymer Science and Technology, Vol. 10, Seiten 1 bis 19, J. Wiley, 1987). Der Anteil der Praepolymerisate PM' an den flüssigen Polymervorstufen liegt im Bereich 0 bis 20 Gew.-%, vorzugsweise 0 bis 10 Gew.-%. Beispielsweise kann das Praepolymerisat PM' PMMA oder ein Copolymerisat aus Methylmethacrylat und Methylacrylat im Gewichtsverhältnis 9 : 1 mit einem mittleren Molekulargewicht M_{w} von etwa 2,5 x 10⁵ Dalton sein.

Die flüssigen Polymervorstufen PM sollen bevorzugt eine Viskosität von weniger als 5 Pa•s, vorzugsweise von weniger als 0,5 Pa•s bei der zur Formgebung vorgesehenen Temperatur aufweisen.

### Die Herstellung der Gießharz-Suspensionen

Zweckmäßigerweise geht man bei der Herstellung der Gießharz-Suspensionen von der flüssigen Polymervorstufe B) aus, welche die Monomeren M und die Praepolymerisate PM enthält und welche die organische Phase bildet.
In die organische Phase wird nun mit Hilfe mechanischer Dissolver der anorganische Füllstoff A) und die hochdisperse Siliciumdioxidkomponente C) eingetragen, wobei die Füllstoffteilchen-Fraktionen einzeln zugegeben werden können. Die Reihenfolge der Zugabe der Füllstoffteilchen unterschiedlicher Größe ist nicht festgelegt. Der Vorgang ist in der Regel nach 10 Minuten abgeschlossen. Danach wird die Suspension über einen Zeitraum von etwa 10 Minuten am Dissolver dispergiert, wobei die Umlaufgeschwindigkeit des Dissolvers etwa 10 bis 20 Meter pro Sekunde beträgt. Im allgemeinen werden die anorganischen Füllstoffe A) der organischen Phase B) solchermaßen zugegeben, daß die Viskosität nicht über einen Wert von etwa 10 Pa•s steigt.
Anschließend löst man die Polymerisationshilfsmittel, wie an sich bekannte Polymerisationsinitiatoren in Mengen von 0,1 bis 5 Gew.-% bezogen auf die Monomeren M. Als Polymerisationsinitiatoren werden Radikalbildner eingesetzt, deren Zerfall in Radikale thermisch oder durch Redox-Prozesse induziert werden kann. Grundsätzlich sind alle diejenigen geeignet, die bereits bei tiefen Temperaturen einen hohen Radikalstrom liefern (vgl. J. Brandrup, E.H. Immergut, "Polymer Handbook", 3rd. Ed., Kapitel III, Seiten 1 bis 65, J. Wiley, 1989). In Frage kommen z.B. Peroxyverbindungen wie tertiäre Ester von Persäuren wie Peroxidicarbonate, Perpivalate u.ä. Genannt seien z.B. das Bis-(4-tert.Butylcyclohexyl)-peroxidicarbonat und/oder das tert.Butylperpivalat, tert.Butylperacetat.
Gegebenenfalls können auch an sich bekannte Molekulargewichtsregler, beispielsweise Schwefelregler vom Typ der Mercaptane in den üblichen Mengen, in der Regel 0,05 bis 2 Gew.-% bezogen auf die Monomeren M bei der Polymerisation eingesetzt werden (vgl. Rauch-Puntigam, loc.cit.). Zweckmäßigerweise erfolgt der Zusatz der Initiatoren erst kurz vor dem Verfüllen und Aushärten der Gießharz-Suspensionen.

Den erfindungsgemäßen Gießharz-Suspensionen können zusätzlich zu den feinteiligen, anorganischen Füllstoffen noch Verstärkerstoffe, wie beispielsweise Faserstoffe, zugesetzt werden. Zu den geeigneten Faserstoffen gehören beispielsweise Glasfasern, Mineralfasern oder Steinfasern. Der Anteil dieser Verstärkerstoffe liegt im allgemeinen unterhalb des Gehaltes an den feinteiligen, anorganischen Füllstoffen, beispielsweise bis zu 30 Gew.-% bezogen auf die Gesamtheit der Komponenten A) - D). Es kann ferner von Vorteil sein, den Gießharz-Suspensionen an sich bekannte Lichtschutzmittel, bzw. UV-Stabilisatoren, in den üblichen Mengen zuzusetzen (vgl. Ullmann's Encyclopedia of Industrial Chemistry, 5th Ed. Vol. A20, pg. 459 - 507, VCH 1992). Im allgemeinen liegt der Anteil an derartigen Stabilisierungszusätzen im Bereich 0,01 bis 5 Gew.-% bezogen auf die Monomeren/Polymeren.
Um farbige Formteile herstellen zu können, kann man der organischen Phase A) auch Pigmente und/oder Farbstoffe, gewöhnlich 0,1 bis 2 Gew.-%, zusetzen. Als Beispiele seien Eisenoxid, Titandioxid, Zinkweiß, Ultramarinblau und Ruß bzw. Asche genannt. Von besonderem Interesse sind Pigmente, die den Platten sogenannte "Erdtönung" verleihen. Pigmente können auch als vorgebildete Dispersionen in die organische Phase A) mit Hilfe geeigneter Pigment-Dispergiermittel eingebracht werden. Gegebenenfalls ist es von Vorteil, wenn die Gießharz-Suspension innere und/oder äußere Trennmittel enthält, die das Anhaften des gehärteten Gießharzes an der Form verhindern und eine gute Oberflächenbeschaffenheit der Gießharz-Formteile bewirken. Beispiele für innere Trennmittel sind Alkali- und Erdalkalisalze von Fettsäuren und Alkylphosphate sowie deren neutralisierte Derivate. Zu geeigneten äußeren Formtrennmitteln gehören auf den Formen befindliche Überzüge, beispielsweise aus Polytetrafluorethylen, Polyorganosiloxan oder Polyvinylalkohol. Von besonderem Interesse sind ferner Verbundsysteme, die durch Aufpolymerisieren von Alkylmethacrylat, insbesondere MMA auf eine vorgegebene Polymer-Unterlage, z.B. auf Schaumstoffe vom Polymethacrylimidschaum-Typ (ROHACELL® ) gewonnen werden können.

### Herstellung der Gießharz-Formkörper

Die mit dem Polymerisationsinitiator versetzte, erfindungsgemäße Gießharz-Suspension läßt sich beispielsweise sehr gut in die üblichen Gießformen vergießen. Vorteilhafterweise wird die Suspension vor dem Verfüllen evakuiert. Die Härtung (= Polymerisation der organischen Phase B)) erfolgt vorzugsweise thermisch, beispielsweise durch Erhitzen auf 50 bis 80 Grad C während 20 bis 60 min, wobei die Härtung unter Anwendung von Druck wie auch ohne Druck verlaufen kann.
Die Herstellung der erfindungsgemäßen Fassadenverkleidungselemente in Plattenform kann im Anschluß an die bekannte Technologie zur Herstellung gegossener PMMA-Platten erfolgen (vgl. H. Rauch-Puntigam, Th. Völker, Acryl- und Methacrylverbindungen, Springer Verlag 1968; Houben-Weyl, Methoden der Organischen Chemie, 4. Aufl., Bd. E20, pg. 1144 - 1149, G. Thieme 1987).

Die Kammern für das Gießverfahren können in klassischer Weise aus Silikat-Glas oder aus Mittelplatten mit hoher Oberflächengüte, z.B. aus (verchromten) hochglanzpolierten Metallplatten (Dicke etwa 4 mm) gebildet werden. Die Stärke der Glasplatten (Tafelgläser mit polierter Oberfläche) richtet sich nach der Größe der Platten und beträgt im Minimum etwa 5 mm. Bei Anwendung geschlossener Kammern werden die an sich üblichen abstandhaltenden Dichtungsschnüre eingesetzt, beispielsweise Rundschnüre aus PVC, wobei die Abstände so bemessen sind, daß Platten der zu fordernden Dicke, beispielsweise im Bereich 6 - 10 mm gebildet werden. Für die flächenmäßigen Dimensionen ist bei der Gießtechnologie neben der praktischen Handhabbarkeit vorwiegend die Geometrie der Polymerisationskammern maßgeblich, wobei Längen von über 3 m bei ca. der halben Breite ohne weiteres realisierbar sind. Kleinere Abmessungen lassen sich in an sich bekannter Weise, z.B. durch Sägen erhalten. Als praxisnahe Abmessungen seien beispielsweise 1,5 m x 3,20 m genannt. Die Kammern können horizontal oder - bei geschlossenen Kammern - auch vertikal angeordnet sein. Es kann auch auf Polymerisatbahnen, Schichtstoffbahnen, Glasfaser, Gewebebahnen u.ä. aufpolymerisiert werden). Eine weitere Alternative zur Herstellung der Fassadenbekleidungsplatten stellt das Gießverfahren auf einer Doppelbandanlage dar, (vgl. EP-B 292 738; DE-A 28 01 221) wobei auch mehrschichtige Platten herstellbar sind.
Die Herstellung der Platten nach dem Gießverfahren erlaubt u.a. die Strukturierung der Oberfläche, beispielsweise als Negativ-Abformung durch entsprechende Positiv-Gestaltung der Bodenfläche einer Kammer. Entsprechend vielfältig sind auch die Möglichkeiten, Strukturelemente mit funktionaler Bedeutung z.B. Auskragungen, Einkerbungen, Löcher, Halterungen u.ä. wo erwünscht, durch zweckmäßige Gestaltung der Polymerisationskammern auszuformen.
Eine weitere vorteilhafte Ausgestaltung der Erfindung ist die kontinuierliche Plattenherstellung auf einem Förderband. Dabei wird die mit einem geeigneten Polymerisationsinitiator versetzte Gießharz-Suspension auf ein laufendes Förderband mit seitlichen Begrenzungen aufgebracht, wobei sie sich aufgrund ihrer niedrigen Viskosität und ihrer geringen Strukturviskosität schnell verteilt und nivelliert. Danach wird die Oberfläche der Suspension mit einem zweiten Metallband abgedeckt. Die Härtung der Suspension kann thermisch entweder durch Heizen der beiden Metallbänder erfolgen oder bei Verwendung geeigneter Redox-Initiatoren auch ohne Fremdheizung durchgeführt werden. Die Restmonomerengehalte der gehärteten Gießharze liegen unterhalb 1 Gew.-% bezogen auf den Gesamtmonomerenanteil, bevorzugt unter 0,5 Gew.-%. Die erfindungsgemäßen Platten können sowohl kleinformatig als insbesondere großformatig (> 0,4 m²) hergestellt werden. Kleinere Formate können aus größeren durch Trennen, insbesondere Sägen erhalten werden. Die Flächenabmessungen sind im wesentlichen durch die Dimensionen der verwendeten Kammern, bei Herstellung in der Bandanlage durch die Bandbreite vorgegeben. Es können somit die in der Praxis erwünschten Abmessungen, beispielsweise bei ca. 3200 mm auf ca. 1300 mm ohne größere Schwierigkeiten erhalten werden. Die Eigenlast der Platten liegt in der Regel im Bereich 0,1 bis 0,2 kN/m². Von besonderem Interesse sind auch Verbundsysteme, die aus einer äußeren, im Gießverfahren hergestellten, hochgefüllten Polyalkyl(meth)acrylat-Platte bestehen, die flächig mit einer Platte aus Kunststoffschaum verbunden ist. Geeignete Kunststoffschäume bestehen z.B. aus PVC, Polystyrol oder Polymethacrylimid (ROHACELL® ) (vgl. Ullmann's Encyclopedia of Industrial Chemistry, 5th. Ed., Vol. A11,pg. 435 - 464, VHC 1988).
Besonders bevorzugt sind Schäume, die in ihrer chemischen Zusammensetzung der äußeren, hochgefüllten Polyalkyl(meth)acrylat-Platte entsprechen. Derartige Schäume sind z.B. in der deutschen Patentanmeldung DE-A 43 13 715 beschrieben.
Die Herstellung der Verbunde kann beispielsweise im Gießverfahren erfolgen. Verwendet man eine geeignete Schaumplatte als Bodenplatte der Polymerisationskammer für das hochgefüllte Polyalkyl(meth)acrylat, erhält man direkt die gewünschte Sandwichstruktur.

Vergleichbare Strukturen erhält man durch flächiges Verkleben der beiden Platten, z.B. mit einem Polymerisationskleber auf Methylmethacrylatbasis (z.B. ACRIFIX® 190 der Röhm GmbH).
Einen weiteren, wesentlichen Aspekt der vorliegenden Erfindung stellt die Befestigung auf den Wänden bzw. auf der Unterkonstruktion dar. Dabei hat es sich als ausgesprochen vorteilhaft erwiesen, daß die Befestigungsmethoden an Erfindungen und Methoden des Standes der Technik anschließen können. Es soll möglichst darauf geachtet werden, daß die Fassadenplatten nicht unter Spannung befestigt werden. Wegen der Natur des Plattenmaterial muß ein gewisser Grad an Beweglichkeit der Platten gewährleistet sein. In der Regel geschieht die Wandbefestigung auf einer Unterkonstruktion, vorteilhaft bestehend aus einer Holzlattung oder einer Aluminium-Unterkonstruktion.
Im Falle der Holzlattung kann die Befestigung mittels Universalschrauben und Abdeckkappen oder mittels (farbiger) Fassadenschrauben erfolgen. Als Richtlinie sei ein Durchmesser von 5,0 bis 5,5 mm bei Längen von 35 - 55 mm genannt. Bei Anwendung von Schrauben ist es angezeigt, die Fassadenplatten generell ca. 5 cm vorzubohren. Bei Alu-Profilen wird vorteilhaft mit Hohlzugnieten, übliche Abmessungen Nietkopf 11,0 - 14,0 mm Durchmesser, Nietdurchmesser 0,5 mm, Klemmlänge 8 - 12 mm, gearbeitet.
Die Bohrlöcher werden gegenüber den Schaftdurchmessern der Befestigungselemente zweckmäßig um einige mm, beispielsweise um ca. 3 mm größer hergestellt.

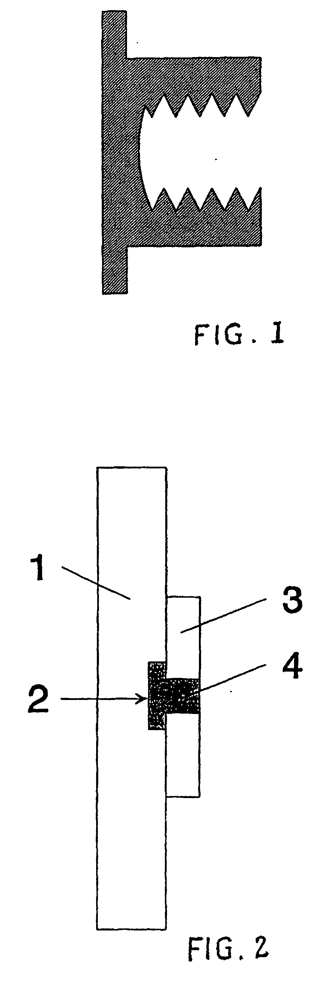

Die senkrechten Randabstände - bei Holzkonstruktionen in der Regel 20 mm, bei Aluminium-Konstruktionen 30 mm - sind zweckmäßigerweise einzuhalten.
Bei einer besonders bevorzugten Befestigungsweise bedient man sich eines rückseitig anzubringenden Ankers, zweckmäßig aus Metall wie beispielsweise Messing (Fig. 1). Das Prinzip der Montage geht aus Fig. 2 hervor. An der Platte (1) werden an den Befestigungsstellen 1,5 bis 2,0 mm tiefe Sacklöcher (2) mit einem Durchmesser - als Anhalt - von 16,5 mm gebohrt und somit die Befestigungsstelle festgelegt. In einer - in der Regel quadratischen - Verstärkungsplatte (3) mit etwa der gleichen Dicke wie die Platte (1) wird mittig ein Loch - als Anhalt seien 10,0 mm genannt - gebohrt. Die Verstärkungsplatte (3) wird mit dem eingelegten Anker (4) auf der Rückseite der Platte (1) befestigt. Die Befestigung kann vorteilhaft durch Kalt-Verschweißen, d.h. Fügung mittels eines (nicht ausgehärteten) Monomer-Polymer-Gemischs, insbesondere vom gleichen Typ wie das Plattenmaterial, vorgenommen werden. Die Materialverbindung zeigt erstaunlicherweise eine noch höhere Festigkeit als das Plattenmaterial selbst, sofern die Verbindung wie üblich auf der Rückseite vorgenommen wird. Die Verstärkungsplatte (3) sollte nicht zu klein bemessen sein: Als Anhalt seien 70 x 70 mm genannt. Die Dichtung der Fugen, die zwischen den Einzelplatten (1) entstehen, kann beispielsweise durch hinterlegte Fugenbleche, die gegebenenfalls farblich auf die Platten abgestimmt sind, vorgenommen werden. Als Anhaltspunkt für die Fugenbreite seien in diesem Fall 10 mm genannt. Vorgebohrte Platten (1) können mittels Bohrhülse, ungebohrte Platten mittels Stufenbohrer mit Anschlag gebohrt werden.

### Vorteilhafte Wirkungen

Entgegen der im Stand der Technik entwickelten Vorstellungen eignen sich die im wesentlichen ebenen Platten gemäß der vorliegenden Erfindung sehr gut zum Einsatz im Außenbereich, d.h. als Fassadenelemente. Diese Fassadenelemente zeichnen sich durch eine Reihe vorteilhafter Eigenschaften aus. Hervorzuheben ist, neben dem etwas geringeren Gewicht - verglichen mit z.B. Steinoder Keramikplatten - die Variabilität hinsichtlich der Farbgebung und dem allgemeinem Erscheinungsbild. Durch entsprechende Pigmentierung und/oder Farbmittelzusatz lassen sich sowohl unifarbene als statistisch verteilte oder farblich differenzierte Farbeinstellungen erzielen. So kann bei Bedarf auf durch geeignete Auswahl von Pigmenten nach Größe und Farbe auch eine Steinimitation (z.B. Granit, Marmor etc.) erreicht werden. Entsprechende Maßnahmen, insbesondere Rezepturen sind beispielsweise aus WO 91/11 404, DE-A 26 27 081; DE-A 27 18 024 bekannt. Hervorzuheben ist ferner das die geltenden Bestimmungen für Fassadenbekleidungen erfüllende Brandverhalten des Plattenmaterials. Beispielsweise werden Platten mit einem Gehalt von 66 Gew.-% Al(OH)₃ nach den in der Bundesrepublik Deutschland geltenden Brandbestimmungen unter DIN 4102 gemäß "B1" eingestuft.
Von besonderer Bedeutung ist die hohe Witterungsstabilität der erfindungsgemäßen Fassadenbekleidungsplatten, die gegebenenfalls noch mit UV-Stabilisatoren dotiert sein können, die ihren Einsatz auf dem Bausektor selbst außerhalb der gemäßigten Klimaten ermöglicht.
In einer besonderen Ausführungsform der vorliegenden Erfindung lassen sich die Platten noch nachträglich nach dem Gießvorgang umformen, was sowohl zur gestalterischen Bearbeitung als auch zur Verbesserung der statischen Eigenschaften ausgenutzt werden kann.

Die folgenden Beispiele dienen zur Erläuterung der Erfindung.

### BEISPIELE

### I. Herstellung einer hochgefüllten Suspension

### Beispiel I-1

In 296,99 g MMA und 0,03 g 2,4-Dimethyl-6-tert-butylphenol werden 40 g PMMA-Praepolymerisat (η_{spez/c} = 130 - 140, M_{w} ca. 400 000) (Plexigum® M920) bei ca. 40 Grad C innerhalb 5 Stunden gelöst und danach auf Zimmertemperatur abgekühlt. In diesem Sirup werden 5,0 g Stearinsäure und 3,0 g Glykoldimethacrylat gelöst. Am Dissolver werden unter mäßigem Rühren 5 g Aerosil® 200, 330,0 g. Aluminiumhydroxid mit einer mittleren Teilchengröße von 45 µm (ALCOA® C33, Produkt der Fa. ALCOA, USA) und danach 330,0 g Aluminiumhydroxid mit einer mittleren Teilchengröße von 8 µm (ALCOA® C333) in den Sirup eingetragen. Danach wird die Suspension mit dem Dissolver (Typ HD 7,5 der Fa. Getzmann, BRD) mit 20,0 m/sec. ca. 10 Minuten dispergiert. Nach Abkühlen auf Raumtemperatur werden in der Suspension am Flügelrührer 1 g Bis-(4-tertbutylcyclohexyl)-peroxidicarbonat und 1 g tert.-Butylperpivalat gelöst und die eingeschlossenen Luftbläschen unter Anlegen eines Vakuums innerhalb sehr kurzer Zeit aus der Suspension entfernt.

### Beispiel I-2

In 266,97 g Methylmethacrylat (MMA) und 0,03 g 2,4-Dimethyl-6-tert.butylphenol werden 60 g eines MMA-Polymerisats (η _{spez/c} = 130 - 140, M_{w} ca. 40 000, Produkt PLEXIGUM® M 920 der Fa. Röhm GmbH) bei ca. 50 Grad C innerhalb 5 Stunden gelöst und danach auf Raumtemperatur abgekühlt. In dem so erhaltenen Sirup werden 5,0 g Stearinsäure und 3,0 g Glykoldimethacrylat gelöst. Am Dissolver (Produkt Dispermat® der Fa. VMA Getzmann/BRD) werden unter mäßigem Rühren 332,5 g Aluminiumhydroxid mit einer mittleren Teilchengröße von 45 µm (Produkt ALCOA® C33 der Fa. ALCOA/USA) und danach 332,5 g Aluminiumhydroxid mit einer mittleren Teilchengröße von 8 µm (Produkt ALCOA® C333) in den Sirup eingetragen. Anschließend wir die Suspension mit dem Dissolver mit 12,5 m/s ca. 10 Minuten dispergiert.

### II. Herstellung von hochgefülltem Plattenmaterial

Aus zwei Silikatglasscheiben (Dicke 6 mm) wird mit Hilfe einer runden PVC-Schnur (Durchmesser 3,2 mm) eine Kammer mit den Abmessungen 3 200 mm x 1 300 mm gebaut. In den Zwischenraum der Silikatglaskammer wird die Suspension gemäß I-1 eingegossen und die Kammer verschlossen. Die gefüllte Kammer wird waagrecht in ein Wasserbad von 40 Grad C eingelegt. Die Polymerisationszeit beträgt 260 Minuten. Anschließend wird in einem Trockenschrank 30 Minuten bei 105 Grad C endpolymerisiert. Danach wird die Kammer entformt und der ausgehärtete Gießling entnommen. Der Plattengießling hat beidseitig hochglänzende Oberflächen und ist nicht durchgebogen.

### III. Herstellung eines hochgefüllten Polymethylmethacrylatschaums

Zu 100 Gew.-Teilen der Suspension aus Beispiel I-2 wird ein Gew.-Teil Dibenzoylperoxid (50 %ig in Di-n-Butylphthalat, Produkt INTEROX® BP-50-FT der Fa. Peroxid Chemie GmbH) und 3,5 g Azo-bis-iso-butyronitril (Produkt INTEROX® NN IBN) zugefügt und gelöst. Unter Rühren werden anschließend 10 Gew.-Teile CO₂-Schnee zur Suspension zugesetzt. Nach einer Rührzeit von 5 Minuten wird die Temperatur der Suspension gemessen. Sie beträgt-5 Grad C. Dann wird unter Rühren der Suspension 1 Gew.-Teil N,N-Dimethyl-p-toluidin als 50 %ige Lösung in MMA zugesetzt. Nach einminütiger Rührzeit wird der Rührer entfernt.
Von dieser Mischung wird in einer offenen Form mit den Abmessungen 2300 x 1300 mm, bestehend aus einer Glasplatte mit einem Rand, der mittels einer runden PVC-Schnur (0,6 mm) gebildet wird, eingefüllt.
Man erhält einen vorwiegend geschlossenporigen Schaum der Dichte 0,66 g/cm³.

### IV. Herstellung eines Laminats

Die hochgefüllte PMMA-Platte aus Beispiel II und die hochgefüllte Schaumplatte aus Beispiel III werden flächig mit dem Polymerisationsklebstoff ACRIFIX® 190 miteinander verklebt. Zu diesem Zweck wird ACRIFIX 190 mit 3 - 5 Gew-% Katalysator® V20 verrührt, bis keine Schlieren mehr sichtbar sind. Luftblasen steigen im abgedeckten Gefäß an die Oberfläche des Klebstoffs oder lassen sich im Vakuum-Exsikkator (minimal 200 mbar) entfernen.

Die so vorbereitete Klebstoffmischung wird direkt auf die Platte gemäß Beispiel III aufgegossen. Dann wird die Platte aus Beispiel II vorsichtig aufgelegt. Überschüssiger Klebstoff tritt an den Kanten aus. Nach ca. 2 Stunden ist der Klebstoff ausgehärtet.

## Patentansprüche

1.Fassadenbekleidungselemente in Plattenform, hergestellt aus hochgefülltem Polyalkylmethacrylat nach dem Gießverfahren in einer formgebenden Kammer oder mittels einer Doppelbandanlage,
**dadurch gekennzeichnet,**
**daß** die radikalische Polymerisation zu dem Polyalkylmethacrylat PM durchgeführt wird, ausgehend von einer Gießharzsuspension enthaltend
A) 40 - 80 Gew.-Teile eines teilchenförmigen anorganischen Füllstoffs, ausgewählt aus der Gruppe bestehend aus Aluminiumhydroxid, Aluminiumoxidhydrat, Magnesiumhydroxid, und dass der anorganische Füllstoff ein Gemisch aus mindestens zwei Füllstoffteilchen-Fraktionen unterschiedlicher mittlerer Teilchengröße ist, wobei das Größenverhältnis der durchschnittlichen Teilchengrößen der großen und der kleinen Füllstoffteilchen zwischen 10:1 und 2 : 1 liegt und das Gewichtsverhältnis der Anteile der großen und der kleinen Füllstoffteilchen zwischen 4 : und 1: 4 liegt,
B) 60 - 20 Gew.-Teile einer flüssigen polymerisierbaren Polyalkylmethacrylat-Vorstufe PM', deren Monomeranteil zu mindestens 50 Gew.-% aus Methylmethacrylat besteht, und
C) 0 bis 5 Gew.-Teile pyrogenes oder thermisch erzeugtes, hochdisperses Siliciumdioxid,
mit der Maßgabe, daß das Polyalkylmethacrylat PM keine Carbonsäuremonomereinheiten enthält.

2. Fassadenbekleidungselemente gemäß Anspruch 1, **dadurch gekennzeichnet, daß** sie 60 - 80 Gew.-% Aluminiumhydroxid enthalten.

3. Fassadenbekleidungselemente gemäß den Ansprüchen 1 bis 2 in Form eines Laminats bestehend aus einer äußeren Schicht gemäß den Merkmalen des Anspruchs 1 und einer damit schlüssig verbundenen Schicht aus Kunststoffschaum.

4. Fassadenbekleidungselemente gemäß Anspruch 3, dadurch gekennnzeichnet, daß die Schicht aus Kunststoffschaum selbst einen Gehalt an Füllstoffteilchen besitzt.

## Claims

1. Façade cladding elements in sheet form, produced from highly filled polyalkyl methacrylate by the casting process in a moulding chamber or using a double belt apparatus, **characterised in that** the radical polymerisation to produce the polyalkyl methacrylate PM is carried out starting from a casting resin suspension containing
A) 40 - 80 parts by weight of a particulate inorganic filler selected from the group consisting of aluminium hydroxide, aluminium oxide hydrate and magnesium hydroxide, and **in that** the inorganic filler is a mixture of at least two filler particle fractions of different mean particle sizes, the size ratio of the average particle sizes of the large and small filler particles being between 10: 1 and 2 : 1 and the weight ratio of the amounts of large and small filler particles being between 4 : 1 and 1 : 4,
B) 60 - 20 parts by weight of a liquid polymerisable polyalkyl methacrylate precursor PM' the monomer content of which consists of at least 50% by weight of methyl methacrylate, and
C) 0 to 5 parts by weight of pyrogenic or thermally produced highly dispersed silicon dioxide,
with the proviso that the polyalkyl methacrylate PM does not contain any carboxylic acid monomer units.

2. Facade cladding elements according to claim 1, **characterised in that** they contain 60 - 80% by weight of aluminium hydroxide.

3. Façade cladding elements according to claims 1 and 2, in the form of a laminate consisting of an outer layer according to the features of claim 1 and a layer of foam plastics integrally attached thereto.

4. Facade cladding element according to claim 3, **characterised in that** the layer of foam plastics itself contains particles of filler.

## Revendications

1. Eléments d'habillage de façade sous la forme d'une plaque réalisée en polyalkylméthacrylate fortement chargé, obtenu selon un procédé de coulée dans une chambre de mise en forme ou à l'aide d'une installation à double bande,
**caractérisés en ce que**
la polymérisation radicalaire pour obtenir le polyalkylméthacrylate PM se fait en partant d'une suspension de résine de coulée contenant :
A) 40-80 % en poids d'une charge anorganique en forme de particules, choisie dans le groupe formé de : hydroxyde d'aluminium, hydrate oxyde d'aluminium, hydroxyde de magnésium et la charge anorganique est un mélange d'au moins deux fractions de particules de charge de dimensions moyennes différentes des particules, le rapport des dimensions des tailles de particules moyennes des particules de charge grandes et petites étant compris entre 10 :1 et 2 :1 et le rapport en poids des parties des particules de charge grandes et petites étant compris entre 4 :1 et 1 :4,
B) 60-20 % en poids d'un polyalkylméthacrylate polymérisable PM' dont la teneur en monomères représente au moins 50 % en poids de méthylméthacrylate et
C) 0 à 5 % en poids de dioxyde de silicium de pyrogénèse et/ou d'origine thermique, fortement dispersé,
et le polyalkylméthacrylate PM ne contient aucune d'unité monomère d'acide carboxylique.

2. Eléments d'habillage de façade selon la revendication 1,
**caractérisé en ce qu'**
ils contiennent entre 60 et 80 % en poids d'hydroxyde d'aluminium.

3. Eléments d'habillage de façade selon les revendications 1 et 2,
sous la forme d'un produit laminé composé d'une couche extérieure selon les caractéristiques de la revendication 1, et d'une couche en mousse de matière plastique reliée à la couche extérieure par une liaison de forme.

4. Eléments d'habillage de façade selon la revendication 3,
**caractérisé en ce que**
la couche en mousse de matière plastique possède elle-même une teneur en particules de charge.
